# EUROPÄISCHE PATENTSCHRIFT

(11) **EP 2 742 001 B1**
(45) Veröffentlichungstag und Bekanntmachung des Hinweises auf die Patenterteilung: **18.07.2018**
(21) Anmeldenummer: 12706034.1
(22) Anmeldetag: 27.02.2012
(51) Int. Cl.: C01F 7/46, C04B 35/111, C04B 35/632, C04B 35/634

(54) **VERFAHREN ZUR HERSTELLUNG VON HOCHREINEM ALUMINIUMOXID DURCH REINIGUNG VON TONERDE**
METHOD FOR PRODUCING ULTRAPURE ALUMINUM OXIDE BY CLEANING CLAY
PROCÉDÉ DE PRODUCTION D'UN OXYDE D'ALUMINIUM DE HAUTE PURETÉ PAR PURIFICATION D'ALUMINE

(30) Priorität: 08.08.2011 EP 11176813
(43) Veröffentlichungstag der Anmeldung: 18.06.2014
(73) Patentinhaber: BASF SE, 67056 Ludwigshafen am Rhein (DE)
(72) Erfinder: SCHREMS, Marcus Georg, 67063 Ludwigshafen (DE); DÜRR, Anna Katharina, 67061 Ludwigshafen (DE); HUBER, Günther, 67071 Ludwigshafen (DE); ZERPA UNDA, Jesus Enrique, 70563 Stuttgart (DE); FREITAG, Katrin, 67065 Ludwigshafen (DE); EICHHOLZ, Christian, 68165 Mannheim (DE); RUSLIM, Franky, 68163 Mannheim (DE)
(74) Vertreter: BASF IP Association
(86) Internationale Anmeldenummer: PCT/EP2012/053229
(87) Internationale Veröffentlichungsnummer: WO 2013/020718

(56) Entgegenhaltungen:
- EP-A2- 0 728 700
- JP-A- 5 170 432
- US-A- 3 370 017

## Beschreibung

Die vorliegende Erfindung betrifft ein Verfahren zur Herstellung von hochreinen Aluminiumoxid sowie die Verwendung der so erhaltenen Aluminiumoxids wie jeweils in den Ansprüchen definiert.

Aluminiumoxid (Al₂O₃) an sich ist bekannt.

Hochreines Aluminiumoxid wird unter anderem für ionenleitende Keramiken benötigt. Hierzu darf der Gehalt an Fremdmetallen, insbesondere von Calcium, nicht größer als 50 ppm sein. Bevorzugt sind sogar noch geringere Calciumgehalte.

Ionenleitende Keramiken sind beispielsweise in J.L. Sudworth and A.R. Tilley, The Sodium Sulphur Battery, Chapman and Hall, New York (1985).beschrieben und werden unter anderem als Elektrolyt in elektrochemischen Zellen, beispielsweise als elektrische Batterien oder Synthesezellen für Alkalimetalle, eingesetzt. Vereinfachend gesagt werden ionenleitende Keramiken in der Regel wie folgt hergestellt: Aluminiumoxid, eine Alkalimetalquelle, in der Regel Alkalimetallsalze und weitere Zuschlagsstoffe werden geformt (Grünkörper) und bei sehr hoher Temperatur gesintert.

Reines Aluminiumoxid ist kommerziell zwar erhältlich, ist aber häufig so teuer, dass es für eine technische Anwendung unerschwinglich ist. JP 5-170432 (SUMITOMO) beschreibt ein Verfahren zur Herstellung eines Aluminiumoxids mit einem geringen CaO-Anteil indem man Aluminiumoxid, das nach einem Bayer-Verfahren gewonnen wurde und bei dem der CaO-Anteil 120 ppm oder weniger beträgt, mit einer anorganischen Säure wäscht und filtriert. Hierbei kommt es häufig vor, dass sich das feinteilige Aluminiumoxid in der Suspension in der Schwebe befindet und nur sehr langsam filtrieren lässt, welches in einem industriellen Verfahren nachteilig ist.

US 3,104,944 beschreibt ein Verfahren zur Herstellung von Aluminiumoxid, wobei man ein Aluminiumsalz welches eine ionische Erdalkaliverunreinigung enthält, bei einem sauren pH-Wert von 4,5 bis 7 in ein Aluminiumhydroxid-Hydrogel umwandelt und das Alkalimetall mit einer aminosubstituierten Carbonsäure extrahiert, das Hydrogel wäscht und calciniert.

Aufgabe der vorliegenden Erfindung war es den Nachteilen des Standes der Technik abzuhelfen und ein Verfahren zur Verfügung zu stellen, welches erlaubt aus verunreinigter Tonerde reines Aluminiumoxid zu erhalten, welches insbesondere für die Herstellung von ionenleitenden Keramiken geeignet ist.

Die Aufgabe wurde durch das in den Ansprüchen definierte Verfahren und die in den Ansprüchen definierte Verwendung gelöst.

Das als Ausgangsstoff dienende rohe alpha- und/oder gamma-Aluminiumoxid hat in der Regel einen Gesamtgehalt an Calcium im Bereich von 50 bis 2000 ppm, beispielsweise 200 bis 1000 ppm, jeweils bezogen auf das rohe alpha- und/oder gamma-Aluminiumoxid und als Gewichtsppm verstanden.

Der Aluminiumoxidgehalt des als Ausgangsstoff dienenden rohen alpha- und/oder gamma-Aluminiumoxids beträgt üblicherweise 99,5 bis 99,8 Gew.-%, bezogen auf das rohen alpha- und/oder gamma-Aluminiumoxid. Als weitere Verunreinigungen in diesem rohen alpha- und/oder gamma-Aluminiumoxid kommen noch folgende Elemente in Betracht: Silicium, Natrium, Eisen, Titan.

Die mittlere Partikelgröße des, gegebenenfalls gemahlenen, als Ausgangsstoff dienenden rohen alpha- und/oder gamma-Aluminiumoxids liegt üblicherweise im Bereich von 0,5 bis 200 Mikrometer, beispielsweise bei 2 Mikrometern.

Das als Ausgangsstoff dienende rohe alpha- und/oder gamma-Aluminiumoxid, auch als "Tonerde" bezeichnet und beispielsweise als Handelsform "sinteraktive Tonerde" angeboten, mit dem oben angegebenen Gesamtgehalt an Calcium, wird in einem ersten Schritt mit einer wässrigen Lösung oder Suspension, enthaltend die Verbindungen ausgewählt aus der Gruppe anorganische Säure, organische Säure und Komplexbildner, vermischt, beispielsweise indem man das rohe alpha- und/oder gamma-Aluminiumoxidmit Wasser und einem oder mehreren Verbindungen ausgewählt aus der Gruppe anorganische Säure, organische Säure und Komplexbildner versetzt.

Die anorganischen oder organischen Säuren oder die Komplexbildner oder jegliche Mischungen aus diesen Komponenten werden nachfolgend auch "Extraktionsmittel" genannt.

Als anorganische Säuren können eingesetzt werden: Salpetersäure, Salzsäure, Bromwasserstoffsäure, Flusssäure, lodwasserstoffsäure, Phosphorsäure, Schwefelige Säure, Schwefelsäure, Sulfonsäuren wie Methansulfonsäure, Phosphorige Säure oder andere anorganische Säuren.

Als organische Säuren können eingesetzt werden: Ameisensäure, Essigsäure, Propionsäure, sowie andere organische Säuren. Bevorzugt unter den organischen Säuren sind Säuren, die mischbar mit Wasser sind und bei Raumtemperatur flüssig sind. Besonders bevorzugt sind aliphatische Säuren der Form RCOOH, wobei R beispielsweise gewählt ist aus H, CH₃, CH₂CH₃.

Als Komplexbildner können eingesetzt werden: Komplexbildner auf Basis von Nitrilotriessigsäure, Komplexbildner auf Basis von Ethylendiamintetraessigsäure, Komplexbildner auf Basis von Hydroxyethylethylendiamintriessigsäure, Komplexbildner auf Basis von Methylglycindiessigsäure, Komplexbildner auf Basis von Diethylentriaminpentaessigsäure. Hierbei können jeweils die Säuren als auch deren Salze eingesetzt werden. Bevorzugt sind die Natriumsalze oder die Ammoniumsalze der oben genannten Komplexbildner. Ganz besonders bevorzugt sind die Natriumsalze.

Für die Durchführung des Verfahrens werden bevorzugt Salpetersäure, Salzsäure, Ameisensäure, Essigsäure, oder einer oder mehrere der oben genannten Komplexbildner eingesetzt. Ganz besonders bevorzugt ist Salpetersäure.

Die Säuren können bereits verdünnt sein oder in konzentrierter Form zugegeben werden. Gut geeignet sind wässrige verdünnte organische oder anorganische Säuren oder deren Mischungen, deren Wassergehalt beispielsweise im Bereich von 35 bis 99,9 Gew-%, vorzugsweise im Bereich von 70 bis 99,9 Gew-%, liegt

Die oben genannten Komplexbildner werden ebenfalls vorteilhaft in wässriger Lösung oder wässriger Suspension eingesetzt, wobei deren Wassergehalt, bezogen auf die fertige Lösung oder Suspension, beispielsweise im Bereich von 70 bis 99,99 Gew.-%, vorzugsweise im Bereich von 80 bis 99,99 Gew.-% liegt.

Das Mischen des als Ausgangsstoff dienenden rohen alpha- und/oder gamma-Aluminiumoxid mit dem Extraktionsmittel kann in den üblichen Apparaturen, beispielsweise in einem offenen Rührbehälter, geschehen.
Die Mischung aus Schritt 1 wird, vorzugsweise nach einer gewissen Zeit, in Schritt 2 mit einem Flockungshilfsmittel versetzt, beispielsweise durch Rühren. Dies kann in dem Behälter in welchem die Mischung in Schritt 1 erzeugt wurde geschehen oder während des Überführens in einen zweiten Behälter.

Flockungshilfsmittel sind grundsätzlich bekannt. Es sind meist hochmolekulare organische Stoffe wie Polymere oder Polyelektrolyte.

Bei dem erfindungsgemäßen Flockungshilfsmittel handelt es sich um anionische oder kationische oder nicht-ionische (synonym: neutrale) organische hochmolekulare Flockungshilfsmittel oder um eine Kombination hieraus.

Beispiele für erfindungsgemäße anionische Flockungshilfsmittel sind Polyacrylsäuresalze der Alkalimetalle - wie Poly(natriumacrylat) - und mit Carboxylgruppen substituiertes Polyacrylamid.

Beispiele für nicht-ionische erfindungsgemäße Flockungshilfsmittel sind Polyacrylamid, Poly(ethyleneoxid) oder Polymerisate des 1-Vinyl-2-pyrrolidon, N-Vinylformamid.

Beispiele für kationische erfindungsgemäße Flockungshilfsmittel sind Polyethylenimin ("PEI"), Salze, zum Beispiel das Chlorid, des Poly [2-(N,N,N-trimethylamino)-ethylacrylats], Poly[N-Dimethylaminomethyl]acrylamid in quaternisierter Form, Polymere aus substituiertem Acrylamid und/oder Methacrylamid in der jeweiligen Salzform, Polymere des N-Vinylformamids und/oder Vinylacetamids welche im Alkalischen oder Sauren zu den entsprechenden "Vinylamin"-Polymeren hydrolysiert werden, Polymere des N-Vinylimidazols, und/oder 2-Vinylpyridins und /oder 4-Vinylpyridins, jeweils in der Salzform.

Bevorzugt als erfindungsgemäße Flockungshilfsmittel sind kationische oder nicht-ionische Flockungshilfsmittel und eine Kombination aus kationischen und neutralen Flockungsmitteln, jeweils wie oben beschrieben. Besonders bevorzugt sind nicht-ionische Flockungshilfsmittel, zum Beispiel Polyacrylamid, Poly(ethyleneoxid) oder Polymerisate des 1-Vinyl-2-pyrrolidon, N-Vinylformamid.

Erfindungsgemäße Flockungshilfsmittel sind beispeilsweise in der Broschüre "Sedipur® types for water treatment" der TENSID CHEMIE / BASF Group vom August 2002 beschrieben. Beispiele für derartige Flockungshilfsmittel sind Polyacrylamid (nicht-ionisch), mit Carboxylgruppen substituiertes Polyacrylamid (anionisch), mit -COR-Gruppen substituiertes Polyacrylamid (R = O-CH₂-CH₂-N(CH₃)₃Cl) (kationisch), Polyethylenimin (PEI), Poly-DADMAC, Polyamine (siehe Seite 7 der genannten Broschüre).

In Schritt 3 wird aus der Mischung aus Schritt 2 der Feststoff von der Flüssigkeit getrennt, vorzugsweise durch Sedimentation, beispielsweise indem man die Mischung aus Schritt 2 in einen weiteren Behälter überführt, in dem die Sedimentation stattfindet (Sedimentation 1). Die Sedimentation findet beispielsweise in einem Schwerkraftabscheider, z. B. einem Absetzbecken statt. Die abgetrennte Flüssigkeit (Abwasser 1) kann ganz oder teilweise wieder als Extraktionsmittel eingesetzt werden, oder aber verworfen werden. In einer bevorzugten Ausführung wird die Flüssigkeit teilweise zurückgeführt oder verworfen, in einer besonders bevorzugten Ausführung wird die Flüssigkeit verworfen.

Der abgetrennte Feststoff wird in Schritt 4, mit Wasser gemischt, beispielsweise in einem offenen Rührbehälter. Vorzugsweise wird mit einem Flockungshilfsmittel, beispielsweise Sedipur® versetzt. Dies kann in dem Rührbehälter geschehen, oder während des Überführens in einen weiteren Behälter. In einer alternativen Ausführung wird in Schritt 4 auf die Zugabe des Flockungshilfsmittels verzichtet.

In Schritt 5 wird aus der Mischung des Schrittes 4 der Feststoff von der Flüssigkeit g, vorzugsweise durch Sedimentation, beispielsweise indem man die Mischung aus Schritt 4 in einen weiteren Behälter überführt, in dem eine Sedimentation stattfindet (Sedimentation 2). Die Sedimentation findet beispielsweise in einem Schwerkraftabscheider, z. B. einem Absetzbecken statt. Die abgetrennte Flüssigkeit (Abwasser 2) kann ganz oder teilweise wieder in Schritt 1 anstelle des Wassers eingesetzt werden oder aber verworfen werden. In einer bevorzugten Ausführung wird die Flüssigkeit teilweise zurückgeführt oder verworfen, in einer besonders bevorzugten Ausführung wird die Flüssigkeit teilweise zurückgeführt.

Gegebenenfalls können in einem Schritt 6 die Schritte 4 und 5 mehrfach wiederholt werden, oder aber ausgelassen werden. In einer bevorzugten Ausführung werden die Schritte 4 und 5 jeweils einmal ausgeführt und nicht wiederholt.

Die Schritte 1 bis 6 können in der Regel in einem Temperaturbereich von 10 °C bis zum Siedepunkt des verwendeten Extraktionsmittels durchgeführt werden. Bevorzugt werden diese Schritte in einem Temperaturbereich von 15 °C bis 50 °C durchgeführt, ganz besonders bevorzugt werden diese Schritte in einem Temperaturbereich von 15 °C bis 30 °C durchgeführt. Die Schritte 1 bis 6 können in einem Druckbereich von 100 mbar bis 10000 mbar durchgeführt werden. Die Durchführung erfolgt bevorzugt bei atmosphärischem Druck.

Gegebenenfalls wird in einem Schritt 7 der abgetrennte Feststoff aus Schritt 6 zusammen mit den in ihm enthaltenen Resten des Wassers mit den üblichen Methoden zur Trocknung anorganischer Suspensionen, beispielsweise Sprühtrocknung, getrocknet und wird gegebenenfalls anschließend kalziniert.

Gegebenenfalls wird in einem Schritt 7 der abgetrennte Feststoff aus Schritt 6 zusammen mit den in ihm enthaltenen Resten des Wassers mit weiteren Zusätzen gemischt. Dieses Gemisch kann dann gemahlen und getrocknet, vorzugsweise sprühgetrocknet, werden.

Andere Trennungsmethoden als das Sedimentieren zur Abtrennung des Feststoffs von der Flüssigkeit, wie z. B. Filtrieren oder Zentrifugieren haben sich als möglich, aber nicht optimal erwiesen.

Die bei dem erfindungsgemäßen Prozess entstehenden Abwässer sind bei Durchführung des Verfahrens, insbesondere in seiner bevorzugten Form, weder toxisch noch umweltgefährdend.

Die Durchführung des beschriebenen Verfahrens kann kontinuierlich oder diskontinuierlich erfolgen. Eine kontinuierliche Durchführung kann durch eine Kaskade von Rührbehältern erfolgen.

Das nach dem erfindungsgemäßen Verfahren erhältliche reine Aluminiumoxid kann vorteilhaft zur Herstellung von gesinterten Formkörpern bzw. deren Vorläufer, die sogenannten Grünkörper, verwendet werden, wie beispielhaft im folgenden, etwas weiter unten beschrieben.

Als gesinterte Formkörper kommen alle regelmäßig oder unregelmäßig geformten Körper - auch als Keramiken bezeichnet - in Frage, beispielsweise beidseitig offene Zylinder, wie Röhren; einseitig geschlossene Zylinder, beispielsweise sogenannte Tiegel; runde Scheiben, eckige Platten, Stäbe und Röhren mit Lochmuster.

Beispielsweise sind die gesinterten Formkörper, vorzugsweise einseitig geschlossene Zylinder, runde Scheiben oder eckige Platten ionenleitende Keramiken, vorzugsweise alkalimetallionenleitende Keramiken. Ionenleitende Keramiken sind beispielsweise in J.L. Sudworth and A.R. Tilley, The Sodium Sulphur Battery, Chapman and Hall, New York (1985) beschrieben. Sie werden beispielsweise in elekrochemischen Prozessen, wie Elektrolysezellen zur Herstellung von Alkalimetallen oder elektrochemischen Batterien, verwendet.

Vereinfachend gesagt werden gesinterte Formkörper (Keramiken) in der Regel wie folgt hergestellt: Aluminiumoxid und gegebenenfalls weitere Zuschlagsstoffe werden geformt (Grünkörper) und bei sehr hoher Temperatur gesintert.

Vereinfachend gesagt werden ionenleitende Keramiken in der Regel wie folgt hergestellt: Aluminiumoxid, eine Alkalimetallquelle, in der Regel Alkalimetallsalze, und weitere Zuschlagsstoffe werden geformt (Grünkörper) und bei sehr hoher Temperatur gesintert.

### Beispiele

Als zu reinigendes Aluminiumoxid wurde alpha-Aluminiumoxid mit einem Calciumgehalt von 180 ppm verwendet, zum Beispiel "sinteraktive Tonerde" der Firma NABALTEC.

Der Calciumgehalt gemäß folgender Beispiele wurde mit der Methode "optische Atomemissionsspektroskopie (ICP-AES) gemessen. Die getrocknete Probe des zu analysierenden Produkts wurde 30 Minuten lang in konzentrierter Salzsäure gekocht. Aus der überstehenden Phase wurde eine Probe entnommen. Die Endbestimmung des Calciumgehalts erfolgt nach Filtration mit einem 0,2 µm Filter mit der optischen Atomemissionsspektroskopie (ICP-AES). Sedipur® ist eine Marke der BASF SE.

### Beispiel 1 (nicht erfindungsgemäß)

Alpha-Aluminiumoxid (25 g, Ca-Gehalt: 180 ppm) wurde mit 250 g einer 0,1 molaren Na₂EDTA-Lösung (Titriplex III-Lösung) versetzt und bei Raumtemperatur für 4 h gerührt. Die resultierende Suspension konnte nicht dekantiert werden. Anschließend wurde die Suspension über 1,5 h Stunden über eine Glasfilternutsche filtriert. Der Rückstand wurde vier Mal mit Wasser aufgeschlämmt und erneut filtriert. Das gereinigte Aluminiumoxid wurde anschließend für 20 h bei 120 °C und 20 mbar getrocknet und auf seinen Ca-Gehalt analysiert. Die Analyse ergab einen Ca-Gehalt von 50 ppm.

### Beispiel 2 (nicht erfindungsgemäß)

Alpha-Aluminiumoxid (5 g, Ca-Gehalt: 180 ppm) wurde mit 25 g einer 32%igen wässrigen Salzsäure versetzt und bei Rückfluss für 30 min gerührt. Die resultierende Suspension konnte nicht dekantiert werden. Anschließend wurde die Suspension über mehrere Stunden über eine Membrannutsche filtriert. Der Rückstand wurde drei Mal mit Wasser (25 mL) aufgeschlämmt und erneut filtriert, beim dritten Mal Waschen wurde zentrifugiert. Das gereinigte Aluminiumoxid wurde anschließend für 20 h bei 120 °C und 20 mbar getrocknet und auf seinen Ca-Gehalt analysiert. Die Analyse ergab einen Ca-Gehalt von weniger als 10 ppm.

### Beispiel 3 (nicht erfindungsgemäß)

Alpha-Aluminiumoxid (5 g, Ca-Gehalt: 180 ppm) wurde mit 25 g einer 5%igen wässrigen Salpetersäure versetzt und bei Raumtemperatur für 35 min gerührt. Die resultierende Suspension konnte nicht dekantiert werden. Anschließend wurde die Suspension über mehrere Stunden über eine Membrannutsche filtriert. Der Rückstand wurde drei Mal mit Wasser (25 mL) aufgeschlämmt und erneut filtriert. Das gereinigte Aluminiumoxid wurde anschließend für 20 h bei 120 °C und 20 mbar getrocknet und auf seinen Ca-Gehalt analysiert. Die Analyse ergab einen Ca-Gehalt von weniger als 30 ppm.

### Beispiel 4 (nicht erfindungsgemäß)

Alpha-Aluminiumoxid (5 g, Ca-Gehalt: 180 ppm) wurde mit 25 g einer 5%igen wässrigen Salpetersäure versetzt und bei Raumtemperatur für 30 min gerührt. Die resultierende Suspension konnte nicht dekantiert werden. Nachdem sich das Aluminiumoxid weitgehend abgesetzt hatte, wurden 15 mL der Salpetersäure vorsichtig mit einer Pipette abgetrennt und 25 mL Wasser zu dem Gemisch aus Aluminiumoxid und Salpetersäure hinzugegeben. Das Gemisch wurde erneut für 30 min gerührt, über mehrere Stunden absitzen gelassen und 25 mL des Überstands wurden vorsichtig mit einer Pipette entfernt. Anschließend wurden 20 mL Wasser zu dem Gemisch aus Aluminiumoxid und Salpetersäure hinzugegeben. Das Gemisch wurde erneut für 30 min gerührt. Nach einer Stunde hatte sich noch kein Aluminiumoxid sichtbar abgesetzt. Daher wurde das Gemisch zentrifugiert (30 min, 3500 U/min). Dieser Vorgang wurde noch zwei Mal mit je 50 mL Wasser wiederholt. Der nach dem Zentrifugieren erhaltene Feststoff wurde für 20 h bei 120 °C und 10 mbar getrocknet und auf seinen Ca-Gehalt analysiert. Die Analyse ergab einen Ca-Gehalt von 30 ppm.

Die vorangegangenen Beispiele 1 bis 4 zeigen, dass die erfindungsgemäßen Extraktionsmittel zu einer signifikanten Verringerung des Calciumgehalts der Ausgangsprobe führen, dass aber die Trennung Feststoff/wässrige Phase noch nicht optimal ist.

### Beispiel 5 (erfindungsgemäß)

Alpha-Aluminiumoxid (20 g, Ca-Gehalt: 180 ppm) wurde mit 100 g einer 5%igen wässrigen Salpetersäure versetzt und bei Raumtemperatur für 30 min gerührt. Die resultierende Suspension konnte nicht dekantiert werden. Anschließend wurden 4 g einer 0,1%igen (Gewichts-%) Sedipur® NF 104 Lösung (nicht-ionischesPolyacrylamid mit mittleren bis hohem Molgewicht) hinzugegeben. Es erfolgte eine schnelle Flockungsbildung und innerhalb von weniger als 60 sek erfolgte eine vollständige Sedimentation mit klarem Überstand. Der Überstand wurde abdekantiert und der Rückstand mit 100 g Wasser gewaschen. Hierbei erfolgte erneut eine schnelle Sedimentation, jedoch mit trübem Überstand. Der Überstand wurde dekantiert, der Rückstand zusammen mit dem restlichen Wasser in eine Schale überführt. Die Probe wurde für 20 h bei 120 °C und 10 mbar getrocknet und auf ihren Calcium-, Stickstoff- und Kohlenstoff-Gehalt analysiert. Die Analyse ergab einen Ca-Gehalt von 16 ppm, einen Stickstoffgehalt von 0,058% und einen Gesamtkohlenstoffgehalt von 0,16%. Anschließend wurde die Probe bei 1200 °C kalziniert, und erneut auf ihren Stickstoff- und Kohlenstoff-Gehalt analysiert. Die Analyse ergab einen Stickstoffgehalt von <0,001% und einen Gesamtkohlenstoffgehalt von 0,018%.

### Beispiel 6 (erfindungsgemäß)

Alpha-Aluminiumoxid (20 g, Ca-Gehalt: 180 ppm) wurde mit 100 g einer 5%igen wässrigen Salpetersäure versetzt und bei Raumtemperatur für 30 min gerührt. Die resultierende Suspension konnte nicht dekantiert werden. Anschließend wurden 4 g einer 0,1%igen wässrigen (Gewichts-%) Seduipur® NF 106 Lösung (nicht-ionischesPolyacrylamid mit mittleren bis hohem Molgewicht) hinzugegeben. Es erfolgte eine schnelle Flockungsbildung und innerhalb von weniger als 60 sek erfolgte eine vollständige Sedimentation mit klarem Überstand. Der Überstand wurde abdekantiert und der Rückstand mit 100 g Wasser gewaschen. Hierbei erfolgte erneut eine schnelle Sedimentation, jedoch mit trübem Überstand. Der Überstand wurde dekantiert, der Rückstand zusammen mit dem restlichen Wasser in eine Schale überführt. Die Probe wurde für 20 h bei 120 °C und 10 mbar getrocknet und auf ihren Calcium-, Stickstoff- und Kohlenstoff-Gehalt analysiert. Die Analyse ergab einen Ca-Gehalt von 25 ppm, einen Stickstoffgehalt von 0,069% und einen Gesamtkohlenstoffgehalt von 0,13%. Anschließend wurde die Probe bei 1200 °C kalziniert, und erneut auf ihren Stickstoff- und Kohlenstoff-Gehalt analysiert. Die Analyse ergab einen Stickstoffgehalt von <0,001% und einen Gesamtkohlenstoffgehalt von 0,010%.

### Beispiel 7 (erfindungsgemäß)

Alpha-Aluminiumoxid (20 g, Ca-Gehalt: 180 ppm) wurde mit 100 g einer 10 Gew.-%igen wässrigen Essigsäure versetzt und bei Raumtemperatur für 30 min gerührt. Die resultierende Suspension konnte nicht dekantiert werden. Anschließend wurden 6,25 g einer 0,1%igen wässrigen (Gewichts-%) Seduipur NF 104 Lösung (nicht-ionisches Polyacrylamid mit mittleren bis hohem Molgewicht) hinzugegeben. Es erfolgte eine schnelle Flockungsbildung und innerhalb von weniger als 60 sek erfolgte eine vollständige Sedimentation mit trübem Überstand. Der Überstand wurde abdekantiert und der Rückstand mit 100 g Wasser gewaschen. Hierbei erfolgte erneut eine schnelle Sedimentation, jedoch mit sehr trübem Überstand. Der Überstand wurde dekantiert, der Rückstand zusammen mit dem restlichen Wasser in eine Schale überführt. Die Probe wurde für 20 h bei 120 °C und 10 mbar getrocknet und auf ihren Calciumgehalt analysiert. Die Analyse ergab einen Ca-Gehalt von 70 ppm.

Die Beispiele 5 bis 7 zeigen, dass nicht-ionische Flockungsmittel eine schnelle Trennung fest/flüssig bewirken.

### Beispiel 8 (nicht erfindungsgemäß)

Alpha-Aluminiumoxid (20 g, Ca-Gehalt: 180 ppm) wurde mit 100 g Wasser versetzt und bei Raumtemperatur für 30 min gerührt. Die resultierende Suspension konnte nicht dekantiert werden. Anschließend wurden 4 g einer 0,1%igen (Gewichts-%) Sedipur NF 104 Lösung (nicht-ionisches Polyacrylamid mit mittleren bis hohem Molgewicht) hinzugegeben. Es erfolgte eine schnelle Flockungsbildung und innerhalb von weniger als 60 sek erfolgte eine vollständige Sedimentation mit klarem Überstand. Der Überstand wurde abdekantiert und der Rückstand mit 100 g Wasser gewaschen. Hierbei erfolgte erneut eine schnelle Sedimentation, jedoch mit etwas trübem Überstand. Der Überstand wurde dekantiert, der Rückstand zusammen mit dem restlichen Wasser in eine Schale überführt. Die Probe wurde für 20 h bei 120 °C und 10 mbar getrocknet und auf ihren Calcium-, Stickstoff- und Kohlenstoff-Gehalt analysiert. Die Analyse ergab einen Ca-Gehalt von 170 ppm, einen Stickstoffgehalt von 0,014% und einen Gesamtkohlenstoffgehalt von 0,16%.

Beispiel 8 zeigt, dass Wasser alleine als Extraktionsmittel keine signifikante Reduktion des Calciumgehaltes des Ausgangsmaterials bewirkt.

### Beispiel 9 (erfindungsgemäß)

Alpha-Aluminiumoxid (20 g, Ca-Gehalt: 180 ppm) wurde mit 100 g einer 5%igen wässrigen Salpetersäure versetzt und bei Raumtemperatur für 30 min gerührt. Die resultierende Suspension konnte nicht dekantiert werden. Anschließend wurden 4 g einer 0,1%igen (Gewichts-%) Sedipur NF 104 Lösung (nicht-ionisches Polyacrylamid mit mittlerem bis hohem Molgewicht) hinzugegeben. Es erfolgte eine schnelle Flockungsbildung und innerhalb von weniger als 60 sek erfolgte eine vollständige Sedimentation mit klarem Überstand. Der Überstand wurde abdekantiert und der Rückstand mit 100 g Wasser gewaschen. Hierbei erfolgte erneut eine schnelle Sedimentation, jedoch mit trübem Überstand. Der Überstand wurde dekantiert, der Rückstand zusammen mit dem restlichen Wasser in eine Schale überführt. Die Probe wurde für 20 h bei 120 °C und 10 mbar getrocknet und auf ihren Calcium-, Stickstoff- und Kohlenstoff-Gehalt analysiert. Die Analyse ergab einen Ca-Gehalt von 16 ppm, einen Stickstoffgehalt von 0,058% und einen Gesamtkohlenstoffgehalt von 0,16%. Anschließend wurde die Probe bei 1200 °C kalziniert, und erneut auf ihren Stickstoff- und Kohlenstoff-Gehalt analysiert. Die Analyse ergab einen Stickstoffgehalt von <0,001% und einen Gesamtkohlenstoffgehalt von 0,018%.

Beispiel 9 zeigt, dass das Flockungshilfsmittel praktisch nicht als potentiell störender organischer Reststoff in dem Calcium-abgereicherten Material zurückbleibt.

## Patentansprüche

1. Verfahren zur Herstellung von Aluminiumoxid mit geringem Calciumgehalt worin man
(1) rohes alpha- und/oder gamma-Aluminiumoxid mit einem Gesamtgehalt an Calcium im Bereich von 50 bis 2000 ppm, bezogen auf das rohe alpha- und/oder gamma-Aluminiumoxid, mit einer wässrigen Lösung oder Suspension enthaltend die Verbindungen ausgewählt aus der Gruppe anorganische Säure, organische Säure und Komplexbildner, mischt,
(2) die Mischung aus Schritt (1) mit einem Flockungshilfsmittel versetzt,
(3) aus der Mischung des Schrittes (2) den Feststoff von der Flüssigkeit trennt,
(4) den abgetrennten Feststoff im Beisein oder in Abwesenheit eines Flockungshilfsmittels mit Wasser mischt,
(5) aus der Mischung des Schrittes (4) den Feststoff von der Flüssigkeit trennt,
(6) gegebenenfalls die Schritte (4) und (5) einmal oder mehrmals wiederholt,
(7) gegebenenfalls den abgetrennten Feststoff, gegebenenfalls nach Zusatz weiterer Verbindungen, trocknet.

2. Verfahren nach Anspruch 1, wobei die Gruppe anorganische Säure, organische Säure und Komplexbildner besteht aus den anorganischen Säuren Salpetersäure, Salzsäure, Bromwasserstoffsäure, Flusssäure, lodwasserstoffsäure, Phosphorsäure, Schweflige Säure, Schwefelsäure, Sulfonsäuren wie Methansulfonsäure, Phosphorige Säure, den organischen Säuren die mischbar sind mit Wasser und bei Raumtemperatur flüssig, den folgenden Komplexbildnern in ihrer Salz- oder Säureform: Komplexbildner auf Basis von Nitrilotriessigsäure, Komplexbildner auf Basis von Ethylendiamintetraessigsäure, Komplexbildner auf Basis von Hydroxyethylethylendiamintriessigsäure, Komplexbildner auf Basis von Methylglycindiessigsäure, Komplexbildner auf Basis von Diethylentriaminpentaessigsäure.

3. Verfahren nach Anspruch 1 bis 2, wobei wobei die Gruppe anorganische Säure, organische Säure, Komplexbildner besteht aus den anorganischen Säuren Salpetersäure, Salzsäure, den organischen Säuren Ameisensäure, Essigsäure, Propionsäure, den Komplexbildnern auf Basis von EDTA in ihrer Salz- oder Säureform.

4. Verfahren nach Anspruch 1 bis 3, wobei die Trennung des Feststoffs von der Flüssigkeit in den Schritten (3) und/oder (5) durch Sedimentation geschieht.

5. Verfahren nach Anspruch 1 bis 4, wobei Schritt (4) in Gegenwart eines Flockungshilfsmittels durchgeführt wird.

6. Verfahren nach Anspruch 1 bis 5, wobei das Flockungshilfsmittel ausgewählt ist aus der Gruppe anionische, kationische, neutrale Flockungshilfsmittel.

7. Verfahren nach Anspruch 1 bis 6, wobei das Flockungshilfsmittel ausgewählt ist aus der Gruppe Polyacrylamid (nicht-ionisch), mit Carboxylgruppen substituiertes Polyacrylamid (anionisch), mit COR-Gruppen substituiertes Polyacrylamid (R = O-CH₂-CH₂-N(CH₃)₃Cl) (kationisch), Polyethylenimin (PEI), Poly-DADMAC, Polyamine.

8. Verfahren nach Anspruch 1 bis 7, wobei man die Flüssigkeit aus Schritt (5), teilweise in Schritt (1) als Medium zum Mischen zurückführt.

9. Verwendung des, gemäß dem in Anspruch 1 bis 8 definierten Verfahren, in Schritt 7 erhaltenen Aluminiumoxids zur Herstellung von Formkörpern.

10. Verwendung nach Anspruch 9, wobei die Formkörper offene Zylinder oder einseitig geschlossene Zylinder, runde Scheiben oder eckige Platten sind.

11. Verwendung nach Anspruch 9 bis 10, wobei die Formkörper gesinterter Formkörper sind.

12. Verwendung nach Anspruch 9 bis 11, wobei die Formkörper ionenleitende Keramiken sind.

13. Verwendung nach Anspruch 9 bis 12, wobei die Formkörper alkalimetallionenleitende Keramiken sind.

14. Verwendung nach Anspruch 9 bis 13, wobei das Aluminiumoxid zusammen mit anderen Komponenten verwendet wird.

## Claims

1. A process for preparing aluminum oxide with a low calcium content, in which
(1) crude alpha- and/or gamma-aluminum oxide with a total calcium content in the range from 50 to 2000 ppm, based on the crude alpha- and/or gamma-aluminum oxide, is mixed with an aqueous solution or suspension comprising the compounds selected from the group of inorganic acid, organic acid and complexing agent,
(2) the mixture from step (1) is admixed with a flocculating aid,
(3) in the mixture of step (2), the solids are separated from the liquid,
(4) the solids separated are mixed with water in the presence or in the absence of a flocculating aid,
(5) in the mixture of step (4), the solids are separated from the liquid,
(6) optionally, steps (4) and (5) are repeated once or more than once,
(7) optionally, the solids separated optionally after addition of further compounds, are dried.

2. The process according to claim 1, wherein the group of inorganic acid, organic acid and complexing agent consists of the inorganic acids nitric acid, hydrochloric acid, hydrobromic acid, hydrofluoric acid, hydroiodic acid, phosphoric acid, sulfurous acid, sulfuric acid, sulfonic acids such as methanesulfonic acid, phosphorous acid, the organic acids which are miscible with water and liquid at room temperature, the following complexing agents in the salt or acid form thereof: complex agents based on nitrilotriacetic acid, complexing agents based on ethylenediaminetetraacetic acid, complexing agents based on hydroxylethylethylenediamine-triacetic acid, complexing agents based on methylglycinediacetic acid, complexing agents based on diethylenetriaminepentaacetic acid.

3. The process according to claim 1 or 2, wherein the group of inorganic acid, organic acid, complexing agent consists of the inorganic acids nitric acid, hydrochloric acid, the organic acids formic acid, acetic acid, propionic acid, the complexing agents based on EDTA in the salt or acid form thereof.

4. The process according to claims 1 to 3, wherein the separation of the solids from the liquid in steps (3) and/or (5) is accomplished by sedimentation.

5. The process according to claims 1 to 4, wherein step (4) is performed in the presence of a flocculating aid.

6. The process according to claims 1 to 5, wherein the flocculating aid is selected from the group of anionic, cationic, uncharged flocculating aids.

7. The process according to claims 1 to 6, wherein the flocculating aid is selected from the group of polyacrylamide (nonionic), polyacrylamide substituted by carboxyl groups (anionic), polyacrylamide substituted by COR groups (R = O-CH₂-CH₂-N(CH₃)₃Cl) (cationic), polyethyleneimine (PEI), poly-DADMAC, polyamines.

8. The process according to claims 1 to 7, wherein the liquid from step (5) is recycled partly into step (1) as a medium for mixing.

9. The use of the aluminum oxide obtained in step 7 by the process defined in claims 1 to 8 for production of shaped bodies.

10. The use according to claim 9, wherein the shaped bodies are open cylinders or 11 cylinders closed at one end, disks or angular plaques.

11. The use according to claim 9 or 10, wherein the shaped bodies are sintered shaped bodies.

12. The use according to claims 9 to 11, wherein the shaped bodies are ion-conducting ceramics.

13. The use according to claims 9 to 12, wherein the shaped bodies are alkali metal ion-conducting ceramics.

14. The use according to claims 9 to 13, wherein the aluminum oxide is used together with other components.

## Revendications

1. Procédé de fabrication d'oxyde d'aluminium à faible teneur en calcium, selon lequel
(1) de l'oxyde d'aluminium alpha et/ou gamma brut ayant une teneur totale en calcium dans la plage allant de 50 à 2 000 ppm, par rapport à l'oxyde d'aluminium alpha et/ou gamma brut, est mélangé avec une solution ou suspension aqueuse contenant les composés choisis dans le groupe constitué par un acide inorganique, un acide organique et un complexant,
(2) le mélange de l'étape (1) est mélangé avec un adjuvant de floculation,
(3) à partir du mélange de l'étape (2), le solide est séparé du liquide,
(4) le solide séparé est mélangé avec de l'eau en présence ou en absence d'un adjuvant de floculation,
(5) à partir du mélange de l'étape (4), le solide est séparé du liquide,
(6) les étapes (4) et (5) sont éventuellement répétées une fois ou plusieurs fois,
(7) le solide séparé est éventuellement séché, éventuellement après ajout de composés supplémentaires.

2. Procédé selon la revendication 1, dans lequel le groupe constitué par un acide inorganique, un acide organique et un complexant est constitué par les acides inorganiques acide nitrique, acide chlorhydrique, acide bromhydrique, acide fluorhydrique, acide iodhydrique, acide phosphorique, acide sulfureux, acide sulfurique, les acides sulfoniques tels que l'acide méthanesulfonique, l'acide phosphoreux, les acides organiques qui sont miscibles avec l'eau et liquides à température ambiante, les complexants suivants sous leur forme saline ou acide : les complexants à base d'acide nitrilotriacétique, les complexants à base d'acide éthylène-diamine-tétraacétique, les complexants à base d'acide hydroxyéthyléthylène-diamine-triacétique, les complexants à base d'acide méthylglycine-diacétique, les complexants à base d'acide diéthylène-triamine-pentaacétique.

3. Procédé selon les revendications 1 à 2, dans lequel le groupe constitué par un acide inorganique, un acide organique, un complexant est constitué par les acides inorganiques acide nitrique, acide chlorhydrique, les acides organiques acide formique, acide acétique, acide propionique, les complexants à base d'EDTA sous leur forme saline ou acide.

4. Procédé selon les revendications 1 à 3, dans lequel la séparation du solide du liquide aux étapes (3) et/ou (5) a lieu par sédimentation.

5. Procédé selon les revendications 1 à 4, dans lequel l'étape (4) est réalisée en présence d'un adjuvant de floculation.

6. Procédé selon les revendications 1 à 5, dans lequel l'adjuvant de floculation est choisi dans le groupe constitué par les adjuvants de floculation anioniques, cationiques, neutres.

7. Procédé selon les revendications 1 à 6, dans lequel l'adjuvant de floculation est choisi dans le groupe constitué par le polyacrylamide (non ionique), le polyacrylamide substitué avec des groupes carboxyle (anionique), le polyacrylamide substitué avec des groupes COR (R = O-CH₂-CH₂-N(CH₃)₃Cl) (cationique), la polyéthylène-imine (PEI), le poly-DADMAC, les polyamines.

8. Procédé selon les revendications 1 à 7, dans lequel le liquide issu de l'étape (5) est partiellement recyclé dans l'étape (1) en tant que milieu pour le mélange.

9. Utilisation de l'oxyde d'aluminium obtenu à l'étape 7 selon le procédé défini dans les revendications 1 à 8 pour la fabrication de corps moulés.

10. Utilisation selon la revendication 9, dans laquelle les corps moulés sont des cylindres ouverts ou des cylindres fermés d'un côté, des plaques arrondies ou des plaques angulaires.

11. Utilisation selon les revendications 9 à 10, dans laquelle les corps moulés sont des corps moulés frittés.

12. Utilisation selon les revendications 9 à 11, dans laquelle les corps moulés sont des céramiques conduisant les ions.

13. Utilisation selon les revendications 9 à 12, dans laquelle les corps moulés sont des céramiques conduisant les ions de métaux alcalins.

14. Utilisation selon les revendications 9 à 13, dans laquelle l'oxyde d'aluminium est utilisé conjointement avec d'autres composants.
